(19) Europäisches Patentamt
European Patent Office
Office européen des brevets

(11) **EP 3 125 695 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **15710539.6**

(22) Anmeldetag: **19.03.2015**

(51) Int Cl.:
*A21B 3/04* (2006.01)        *F22B 37/50* (2006.01)
*F24C 15/32* (2006.01)

(86) Internationale Anmeldenummer:
**PCT/EP2015/055841**

(87) Internationale Veröffentlichungsnummer:
**WO 2015/150101 (08.10.2015 Gazette 2015/40)**

(54) **BETREIBEN EINES VERDAMPFERS EINES HAUSHALTSGERÄTS**

OPERATION OF A VAPORIZER OF A DOMESTIC APPLIANCE

FONCTIONNEMENT D'UN ÉVAPORATEUR D'UN APPAREIL MÉNAGER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2014 DE 102014206281**

(43) Veröffentlichungstag der Anmeldung:
**08.02.2017 Patentblatt 2017/06**

(73) Patentinhaber: **BSH Hausgeräte GmbH**
**81739 München (DE)**

(72) Erfinder:
• **LEGO, Dieter**
  **76137 Karlsruhe (DE)**
• **NAGEL, Martin**
  **F-67580 Forstheim (FR)**
• **WAGNER, Benjamin**
  **New Bern, 28562 (DE)**

(56) Entgegenhaltungen:
**EP-A1- 1 943 902    EP-A1- 2 703 740**

EP 3 125 695 B1

**Beschreibung**

Die Erfindung betrifft ein Verfahren zum Betreiben eines mit einer Heizung versehenen Verdampfers eines Haushaltsgeräts, wobei der Verdampfer zumindest einen Teil eines Füllstandsdetektors zum Detektieren eines vorbestimmten Füllstands sowie zumindest einen Teil eines Überhitzungsdetektors zum Feststellen einer Überhitzung der Heizung aufweist. Die Erfindung betrifft ferner ein Dampfbehandlungsgerät, das ein Haushaltsgerät ist, das zur Durchführung des Verfahrens eingerichtet ist. Die Erfindung ist insbesondere vorteilhaft anwendbar auf Dampfgargeräte, und zwar als Einzelgeräte oder als Kombinationsgeräte.

Es sind Verdampfer für Haushaltsgeräte bekannt, welche zeitgesteuert mit Pumpen befüllt bzw. entleert werden. Da Pumpen im Allgemeinen Schwankungen ihrer Durchflussrate aufweisen, kann eine reine zeitgesteuerte Entleerung zu einem kurzzeitigen Leerlauf der Pumpe führen. Das hat wiederum einen negativen Einfluss auf die Lebensdauer der Pumpe und ist mit hohen Geräuschemissionen verbunden.

DE 10 2006 029 578 A1 offenbart einen Dampfgarer als Verdampfereinrichtung mit einem Verdampfer für Wasser, wobei der Verdampfer einen beheizbaren Wasserbehälter sowie einen an den Wasserbehälter nach Art von kommunizierenden Röhren angeschlossenen Erkennungsbereich zum Erkennen des Füllstandes des Wasserbehälters aufweist. Der Erkennungsbereich ist senkrecht rohrförmig ausgebildet und weist wenigstens einen Sensor zum Detektieren des Füllstandes auf.

DE 10 2009 044 053 A1 offenbart einen Dampferzeuger für ein Haushaltsgerät mit einem Verdampferraum, an dem ein Anschluss für die Zuleitung von Wasser und mindestens ein Anschluss für die Ableitung von Dampf strömungsleitend angeschlossen sind und mit einer beheizbaren und gegenüber der Horizontalen in Einbaulage schräg angeordneten Verdampferfläche, über der ein Verdampferraum für den erzeugten Dampf ausgebildet ist und in dem sich eine Dampfströmung in Richtung Dampfauslass ausbildet, wobei der Wasserzulauf zur Verdampferfläche über ein in der Zuleitung angeordnetes Ventil oder eine Pumpe steuerbar oder regelbar ist und der Wasserstand über der Verdampferfläche mittels einer Füllstandsüberwachungseinrichtung erfasst und für die Steuerung der Wasserzufuhr zur Verdampferfläche ausgewertet wird. Um einen Dampferzeuger für ein Haushaltsgerät mit geringem Bauvolumen und hoher Heizleistung bzw. Dampfleistung zu gestalten, der für eine kontinuierliche Dampferzeugung ausgebildet ist und bei dem ein Trockengehen der Heizeinrichtung sicher vermieden wird, ist die Füllstandsüberwachungseinrichtung in dem Bereich des Verdampferraumes des Dampferzeugers angeordnet, in dem sich nur eine geringe bis keine Strömungsintensität des Dampfes über der Verdampferfläche ausbildet.

DE 10 2010 029 307 A1 offenbart ein Haushaltsgerät mit einem Behälter zur Aufnahme von Flüssigkeiten, welcher insbesondere zum Bevorraten eines Waschmittels und zur automatischen Dosierung selbigen Waschmittels eingerichtet ist. Es ist eine elektrische Messeinrichtung bereitgestellt, die einen Füllstand des Vorratsbehälters misst. Die Messeinrichtung weist zwei in dem Behälter zueinander beabstandet angeordnete Messelektroden sowie eine mit den Messelektroden gekoppelte Schaltungsanordnung auf, die dazu ausgebildet ist, eine Wechselspannung zwischen den Messelektroden anzulegen und zumindest eine mit der Wechselspannung und mit einem Leitwert eines zwischen den Messelektroden befindlichen Mediums korrelierte Messgröße zu messen. Offenbart ist auch ein entsprechendes Füllstandsmessverfahren.

WO 2009/007456 A2 offenbart eine Vorrichtung zur Zugabe von Wasser zur Dampferzeugung in einem Gargerät, mit einem Verdampfergefäß, in das Wasser abhängig von dem Füllstand des in dem Verdampfergefäß enthaltenen Wassers zuführbar ist, und Elektroden, mit denen der Füllstand des Wassers im Verdampfergefäß detektierbar ist, wobei eine Innenwand des Verdampfergefäßes zumindest teilweise aus einem elektrisch leitfähigen Material ausgebildet ist und dieser Teil der Innenwand eine erste Elektrode ist.

EP 0 471 342 A2 offenbart eine Anordnung, bei der zwei Messelektroden in einem Behälter in unterschiedlichen horizontalen und vertikalen Abständen von einer elektrisch leitfähigen, an Masse gelegten Innenwandung des Behälters angeordnet, eine davon im Bereich des sich ausbildenden Eismantels. Die Messelektroden greifen Widerstandswerte des Eises und/oder des Wassers ab, das sich zwischen den Elektroden und der Behälterinnenwandung befindet. Zur Kühlung des Wassers, unabhängig von dessen chemisch-physikalischer Zusammensetzung, werden den Widerständen entsprechende Potentiale gebildet, die einem Differenzverstärker zugeführt werden. In Abhängigkeit eines Größenvergleichs beider Widerstandswerte wird ein auf den Behälterinhalt wirkendes Kälteaggregat ein- bzw. ausgeschaltet.

DE 10 2009 055 146 A1 offenbart ein Dampferzeugungssystem für ein Haushaltsgerät, insbesondere ein Dampfgargerät, das mindestens ein entleerbares Flüssigkeitsreservoir, einen aus dem Flüssigkeitsreservoir über mindestens eine Versorgungsleitung mit Flüssigkeit versorgbaren Verdampfer und mindestens eine Pumpe zum Bewegen der Flüssigkeit aufweist, wobei die Flüssigkeit mittels der mindestens einen Pumpe in Richtung des Flüssigkeitsreservoirs rückförderbar ist. Ein Verfahren dient zum Betreiben des Dampferzeugungssystems.

DE 19741881 A1 offenbart ein Haushaltgerät zum Dampfgaren bei annäherndem Umgebungsdruck, welches einen Garraum, einen Dampferzeuger mit einer Heizeinrichtung und einen Temperatursensor aufweist, welcher mit einer Regeleinrichtung zum Regeln der Heizeinrichtung des Dampferzeugers verbunden ist. Um ein Haushaltgerät zum Dampfgaren bei annäherndem Umgebungsdruck zu schaffen, in welchem ausschließlich mit Dampf gegart wird, welches flexibel in der Küche, sowie unabhängig von Bedingungen am Aufstellort einbaubar sein soll, ist der Dampferzeuger mit der Heizeinrichtung separat außerhalb des Garraumes angeordnet. Ein Wasserbehälter ist bevorzugt in der Umgebung des Dampferzeugers und der Temperatursensor im Garraum angeordnet.

EP 2 703 740 A1 offenbart eine Garvorrichtung, umfassend einen Hauptkörper, der eine Garkammer definiert, wobei die Garkammer mit einem Dampfzufuhrloch zum Sprühen von Dampf in die Garkammer gebildet ist, einen an dem Hauptkörper montierten Behälter zum Speichern von Wasser, einen an dem Hauptkörper montierten Dampferzeuger zum Zuführen von Dampf zu der Garkammer durch das Dampfzufuhrloch, eine Wasserzufuhrpumpe zum Pumpen von Wasser von dem Behälter zu dem Dampferzeuger, eine Ablaufpumpe zum Pumpen von Wasser von dem Dampferzeuger zu dem Behälter und ein in dem Dampferzeuger angeordnetes Heizelement. Der Dampferzeuger umfasst einen ersten Teil, in dem von dem Behälter zugeführtes Wasser gespeichert wird, und einen zweiten Teil, der sich von dem ersten Teil nach oben erstreckt und eine Breite aufweist, die kleiner ist als die Breite des ersten Teils.

Es ist die **Aufgabe** der vorliegenden Erfindung, die Nachteile des Standes der Technik zumindest teilweise zu überwinden und insbesondere eine Möglichkeit zum Verhindern eines Leerlaufs einer Pumpe eines Verdampfers eines Haushaltsgeräts bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Betreiben eines mit einer Heizung versehenen Verdampfers eines Haushaltsgeräts, wobei der Verdampfer zumindest einen Teil eines Füllstandsdetektors zum Detektieren eines vorbestimmten Füllstands sowie zumindest einen Teil eines Überhitzungsdetektors zum Feststellen einer Überhitzung der Heizung aufweist. Das Verfahren weist mindestens die folgenden Schritte auf: (i) Füllen des Verdampfers mindestens bis zu dem vorbestimmten Füllstand; (ii) Entleeren des Verdampfers mittels einer Entleereinrichtung; (iii) Starten einer Zeitmessung, wenn der vorbestimmte Füllstand unterschritten wird; (iv) Einschalten einer Heizung des Verdampfers, wenn der vorbestimmte Füllstand unterschritten wird; (v) Stoppen der Zeitmessung, wenn ein Überhitzen der Heizung festgestellt wird; und (vi) Berechnen einer Förderleistung bei dem Entleeren des Verdampfers aus einer mittels der Zeitmessung bestimmten Zeitdauer zum Entleeren, wobei das Berechnen ein Dividieren eines Flüssigkeitsvolumens des Verdampfers mit der Zeitdauer zum Entleeren umfasst

Erfindungsgemäß umfasst das Berechnen der Förderleistung, Le, beim Entleeren in Schritt (vi) ein Dividieren eines Flüssigkeitsvolumens, Ve, des Verdampfers bzw. dessen Aufnahmeraums mit der Entleerungszeitdauer, $\Delta$te, also gilt insbesondere

$$Le = Ve \:/\: \Delta te \qquad\qquad (1)$$

Es ist eine Weiterbildung, dass

$$Le = [(Ve + A) \:/\: (\Delta te + B)] + C \qquad\qquad (2)$$

gilt, wobei A, B und C bestimmte, insbesondere durch Berechnung und/oder experimentell bestimmte Zahlenwerte sind, insbesondere sog. "Offsets". Jeder der Zahlenwerte mag negativ, positiv oder Null sein. Durch diese Zahlenwerte mag eine, insbesondere experimentell bestimmte, Korrektur des damit addierten Parameters vorgenommen werden. So mag durch den Zahlenwert B eine Korrektur der zum Entleeren benötigten Zeitdauer vorgenommen werden, z.B. von der Größe eines Zeitversatzes zwischen einem Entleeren des Ausnahmeraums und einem Überhitzen der Heizung.

Dieses Verfahren weist den Vorteil auf, dass sie ohne zusätzliche Sensorik (z.B. Druck- oder Durchflussmesser) und damit einfach und preiswert ein Leerlaufen einer Entleereinrichtung zum Entleeren des Verdampfers verhindern kann. Dadurch wiederum kann eine Lebensdauer der Entleereinrichtung verlängert werden, und es können störende Geräusche der Entleereinrichtung bei Leerlaufen im normalen Betrieb verhindert werden. Auch ermöglicht dieses Verfahren den Einsatz einer besonders kostengünstigen Entleereinrichtung mit höheren Toleranzen ihrer Förderleistung.

Der vorbestimmte Füllstand mag ein Füllstand von mehreren detektierbaren Füllständen oder Füllstandswerten sein. Der vorbestimmte Füllstand mag alternativ der einzige detektierbare Füllstand sein. Der vorbestimmte Füllstand mag insbesondere ein oberer detektierbarer, "oberer" oder "maximaler" Füllstand sein.

Durch Schritt (i) wird der Aufnahmeraum mindestens bis zu seinem im normalen Betrieb vorbestimmten oder maximalen Füllstand befüllt. Das Erkennen, ob der vorbestimmte Füllstand erreicht worden ist, geschieht mittels des Füllstandsdetektors.

Dann wird in Schritt (ii) die Entleereinrichtung zum Entleeren des Verdampfers bzw. seines Aufnahmeraums in Betrieb gesetzt.

Wird in Schritt (iii) mittels des Füllstandsdetektors erkannt, dass die in dem Aufnahmeraum befindliche Flüssigkeit den vorbestimmten Füllstand unterschritten hat, wird die Zeitmessung ausgelöst, z.B. zu einem Startzeitpunkt t0. Der Startzeitpunkt t0 entspricht also dem Zeitpunkt, bei dem der Füllstand gerade den vorbestimmten Füllstand unterschritten hat. Da zu diesem Zeitpunkt die Abweichung zu dem vorbestimmten Füllstand sehr gering ist, entspricht der Startzeitpunkt t0 mit hoher Genauigkeit dem vorbestimmten Füllstand.

Das Einschalten der Heizung in Schritt (iv) sorgt dafür, dass sich die Heizung auf Betriebstemperatur oder zumindest nahe der Betriebstemperatur befindet, wenn die Entleereinrichtung den Verdampfer bzw. dessen Aufnahmeraum (ggf. bis auf geringe Flüssigkeitslachen am Boden des Aufnahmeraums) entleert hat. Mit dem Entleeren des Verdampfers bzw. dessen Aufnahmeraums überhitzt jedoch die Heizung, was durch den Überhitzungsdetektor festgestellt wird. Da der Überhitzungsdetektor typischerweise schnell anspricht, entspricht der Endzeitpunkt t1, zu dem das Überhitzen der Heizung festgestellt wird, mit ausreichender Genauigkeit demjenigen Zeitpunkt, zu dem der Verdampfer bzw. dessen Aufnahmeraum entleert worden sind.

In Schritt (v) wird zu dem Endzeitpunkt t1 die Zeitmessung gestoppt. Folglich ergibt sich eine Entleerungszeitdauer $\Delta$te aus einer Differenz t1 - t0. Diese Entleerungszeitdauer $\Delta$te berücksichtigt eine Vielzahl von sonst nur schwer vorbestimmbaren Randparametern, die den Durchfluss der Entleerungseinrichtung beeinflussen. Durch Nutzung dieser Entleerungszeitdauer $\Delta$te lassen sich also die systembedingten Toleranzen erfassen und berücksichtigen. Im Fall einer Entleereinrichtung in Form oder mit einer Pumpe mag die Entleerungszeitdauer $\Delta$te auch als "Abpumpzeit" bezeichnet werden.

In Schritt (vi) wird eine Förderleistung beim Entleeren des Verdampfers bzw. dessen Aufnahmeraums aus der Entleerungszeitdauer bzw. Zeitdauer zum Entleeren $\Delta$te bestimmt. Durch die so vergleichsweise genau bestimmte Förderleistung beim Entleeren lässt sich ein Leerlauf der Entleerungseinrichtung, insbesondere Pumpe, vermeiden, und zwar auch bei einem dann zeitgesteuerten Betrieb der Entleerungseinrichtung.

Es ist eine Weiterbildung, dass das Dampfbehandlungsgerät ein Gerät zur Behandlung von Speisen ist, insbesondere ein Gargerät. Das Dampfbehandlungsgerät mag ein alleinstehendes Gerät sein oder mag ein Kombinationsgerät sein, insbesondere aufweisend einen Ofen mit Dampfgarfunktionalität. Ein solcher Ofen mag ein Einzelgerät oder eine Ofen/Kochfeld-Kombination (Herd) sein. Der Ofen mag insbesondere ein Backofen sein.

Der Verdampfer dient dazu, in ihm befindliche Flüssigkeit mittels der Heizung zu verdampfen bzw. in Dampf umzuwandeln. Die Heizung ist insbesondere eine elektrisch betriebene Heizung. Der entstehende Dampf mag in einen Speisenbehandlungsraum des Dampfbehandlungsgeräts geleitet werden. Der Verdampfer weist zur Aufnahme der durch die Heizung aufheizbaren Flüssigkeit einen Aufnahmeraum auf. Die Heizung ist bevorzugt in dem Aufnahmeraum und/oder an einer Wand des Aufnahmeraums angeordnet. Die Flüssigkeit mag insbesondere Wasser mit oder ohne Zusätze sein, speziell Frischwasser. Der Verdampfer mag auch als Verdampfereinheit oder Dampferzeugungseinrichtung bezeichnet werden.

Der Verdampfer mag in dem Speisenbehandlungsraum untergebracht sein, z.B. wandseitig oder bodenseitig, oder mag außerhalb des Speisenbehandlungsraums untergebracht sein.

Der Füllstandsdetektor mag z.B. einen in dem Aufnahmeraum oder in einem damit fluidisch verbundenen Messraum beweglich untergebrachten Schwimmer aufweisen. Der Schwimmer mag z.B. mechanisch oder magnetisch auslösen, z.B. mittels des Hall-Effekts. Der Füllstandsdetektor mag zusätzlich oder alternativ als ein elektrischer Schalter ausgebildet sein. Der elektrische Schalter mag z.B. zwei Elektroden aufweisen, welche durch die Flüssigkeit elektrisch verbindbar sind, wenn die Flüssigkeit den vorbestimmten Füllstand erreicht. Der Füllstandsdetektor mag auch optische, kapazitive und/oder Mittel aufweisen, um das Erreichen oder Überschreiten des vorbestimmten Füllstands zu detektieren.

Die Entleereinrichtung mag insbesondere eine Pumpe sein oder aufweisen. Das Verfahren ist insbesondere geeignet, um eine Kolbenpumpe durch Verhindern eines häufigen Leerlaufs zu schonen.

Unter einem Teil eines Detektors mag insbesondere ein sensorischer Teil oder Sensor des Detektors verstanden werden, z.B. elektrische Kontakte, ein Hall-Sensor, eine IR-Sensorik, eine thermisch abhängig elektrisch leitende Schicht usw. Eine Auswerteeinheit zum Auswerten (z.B. zum Durchführen eines Schwellwertvergleichs) eines von der Sensorik ausgegebenen Signals (z.B. von analogen oder digitalen Messwerten, z.B. Spannungswerten) mag einen Teil des Verdampfers darstellen oder mag z.B. außerhalb des Verdampfers angeordnet sein. Die Auswerteeinheit mag z.B. eine Schaltung wie einen Mikroprozessor, einen ASIC, ein FPGA usw. umfassen. Jedoch mag auf eine Auswerteeinheit auch verzichtet werden. So mag z.B. durch ein von einer Sensorik ausgegebenes Spannungssignal ein Schalter geschaltet werden, z.B. ein elektronischer Schalter wie ein Transistor oder ein elektrischer Schalter wie ein Relais.

Es ist eine Ausgestaltung, dass Schritt (i) ein Füllen des Verdampfers über den vorbestimmten Füllstand hinaus umfasst. Dadurch wird sichergestellt, dass der Übergang zwischen "vollem Verdampfer" (vorbestimmter, insbesondere oberer, Füllstand erreicht) und "nicht mehr vollem Verdampfer" (vorbestimmter Füllstand unterschritten) besonders sicher feststellbar ist und z.B. Hysterese-Effekte durch eine Flüssigkeitshaftung usw. ausgeschlossen sind. Um zu verhindern, dass dabei Flüssigkeit aus einer Dampfauslassöffnung des Verdampfers austritt, liegt der vorbestimmte Füllstand bevorzugt beabstandet unterhalb einer unteren Kante der Dampfauslassöffnung. Schritt (i) mag z.B. ein Füllen des Verdampfers für eine vorbestimmte Zeitdauer nach Feststellen des Erreichens des vorbestimmten Füllstands umfassen.

Es ist noch eine Ausgestaltung, dass Schritt (iv) ein Einschalten der Heizung unmittelbar dann, wenn der vorbestimmte Füllstand unterschritten wird, umfasst. Dadurch wird besonders sicher erreicht, dass die Heizung auf normale, hohe Temperatur aufgeheizt worden ist, wenn der Verdampfer bzw. dessen Aufnahmeraum entleert worden ist. Eine Volumenreduzierung der in dem Verdampfer befindlichen Flüssigkeit durch eine Dampfentwicklung ist dabei typischerweise vernachlässigbar gering.

Es ist eine weitere Ausgestaltung, dass Schritt (iv) ein Einschalten der Heizung mit einer definierten Verzögerung nach Feststellen des Unterschreitens des vorbestimmten Füllstands umfasst. Dadurch kann immer noch eine zum Zweck des Durchführens des Verfahrens bei entleertem Verdampfer ausreichend aufgeheizte Heizung bereitgestellt werden, jedoch nun bei verringertem Stromverbrauch.

Es ist noch eine weitere Ausgestaltung, dass das Feststellen des Überhitzens der Heizung in Schritt (v) ein Abschalten der Heizung auslöst. Das Feststellen des Überhitzens mag folglich einen Teil einer Sicherheitsabschaltroutine darstellen, um den Verdampfer vor einer Beschädigung oder sogar Zerstörung zu bewahren.

Es ist auch eine Ausgestaltung, dass das Berechnen der Förderleistung, Le, beim Entleeren in Schritt (vi) mittels Dividierens eines Flüssigkeitsvolumens, Ve, des Verdampfers bzw. dessen Aufnahmeraums mit der Entleerungszeitdauer, $\Delta$te, umfasst, also insbesondere

$$Le = Ve / \Delta te \qquad\qquad (1)$$

gilt.

Es ist eine Weiterbildung, dass

$$Le = [(Ve + A) / (\Delta te + B)] + C \qquad\qquad (2)$$

gilt, wobei A, B und C bestimmte, insbesondere durch Berechnung und/oder experimentell bestimmte Zahlenwerte sind, insbesondere sog. "Offsets". Jeder der Zahlenwerte mag negativ, positiv oder Null sein. Durch diese Zahlenwerte mag eine, insbesondere experimentell bestimmte, Korrektur des damit addierten Parameters vorgenommen werden. So mag durch den Zahlenwert B eine Korrektur der zum Entleeren benötigten Zeitdauer vorgenommen werden, z.B. von der Größe eines Zeitversatzes zwischen einem Entleeren des Ausnahmeraums und einem Überhitzen der Heizung.

Es ist ferner eine Ausgestaltung, dass sich an Schritt (vi) folgende weitere Schritte anschließen: (a) Befüllen des Verdampfers mindestens bis zu dem vorbestimmten Füllstand; (b) Feststellen einer Zeitdauer zum Befüllen bis zu dem vorbestimmten Füllstand; und (c) Berechnen einer Förderleistung beim Befüllen mittels Dividierens eines Flüssigkeitsvolumens des Verdampfers mit der Zeitdauer zum Befüllen. Diese Ausgestaltung kann insbesondere als Sicherheitsmerkmal des Dampfbehandlungsgeräts verwendet werden. Sie macht sich zunutze, dass nach Schritt (vi) der Aufnahmeraum des Verdampfers keine Flüssigkeit mehr enthält. Reste bzw. Lachen sind typischerweise durch die Heizung verdampft worden. Somit ist eine besonders genaue Bestimmung der Förderleistung beim Befüllen möglich.

Es ist eine Ausgestaltung davon, dass - insbesondere in einem Dampfbehandlungsbetrieb des Verdampfers - das Befüllen gestoppt wird, wenn ein auf Grundlage der Förderleistung beim Befüllen bestimmter Sicherheitsschwellwert erreicht oder überschritten wird. Beispielsweise mag ein Befüllen nach Überschreiten eines vorbestimmten Zeitschwellwerts abgeschaltet werden. Dadurch kann ein Befüllen des Verdampfers bei einem Versagen des Füllstandsdetektors unterbrochen werden. Dies wiederum beugt einem Überfluten des Dampfbehandlungsgeräts vor und ggf. auch einem Wasserschaden außerhalb des Geräts.

Es ist außerdem eine Ausgestaltung, dass das Verfahren nur in einem anormalen Betrieb des Dampfbehandlungsgeräts, welcher keiner Dampfbehandlung einer Speise dient, durchgeführt wird. Dieser anormale Betrieb mag bei einer Erstinbetriebnahme des Dampfbehandlungsgeräts, nach einer Netzwiederkehr, im Anschluss an bestimmte Wartungsprogramme, im Rahmen eines Entkalkungsprogramms und/oder im Zusammenhang mit einem Funktionstest der Entleereinrichtung durchgeführt werden.

Die Aufgabe wird auch gelöst durch ein Dampfbehandlungsgerät, welches zur Durchführung des oben beschriebenen Verfahrens ausgebildet ist. Das Dampfbehandlungsgerät kann analog zu dem Verfahren ausgebildet werden und weist die gleichen Vorteile auf.

Das Dampfbehandlungsgerät weist insbesondere einen mit einer Heizung versehenen Verdampfer wie oben beschrieben auf, wobei der Verdampfer also zumindest einen Füllstandsdetektor zum Detektieren eines vorbestimmten Füllstands sowie einen Überhitzungsdetektor zum Feststellen einer Überhitzung der Heizung aufweist. Das Dampfbehandlungsgerät weist zudem beispielsweise eine Befülleinrichtung zum Befüllen des Verdampfers (z.B. gemäß Verfahrensschritt (i)), eine Entleereinrichtung zum Entleeren des Verdampfers (z.B. gemäß Verfahrensschritt (ii)), eine Zeitmesseinrichtung zum Durchführen der Verfahrensschritte (iii) und (v) und/oder eine Berechnungseinrichtung zumindest zur Durchführung von Schritt (vi) auf.

Die Zeitmesseinrichtung mag insbesondere ein in dem Dampfbehandlungsgerät vorhandener "Timer" sein.

Die Berechnungseinrichtung mag eine eigenständige Berechnungseinrichtung sein. Es ist für eine einfache und preiswerte Gestaltung vorteilhaft, wenn als Berechnungseinrichtung eine üblicherweise bereits in dem Dampfbehandlungsgerät vorhandene Einrichtung nutzbar ist, z.B. eine zentrale Steuereinrichtung. Die Berechnungseinrichtung mag insbesondere als eine elektronische Schaltung ausgebildet sein, z.B. aufweisend einen Mikroprozessor, einen ASIC, einen FPGA usw.

Es ist eine Ausgestaltung, dass die Heizung eine bodenseitig an einem Aufnahmeraum für Flüssigkeit angeordnete Flächenheizung ist. Dies ergibt den Vorteil, dass eine Nutzung der gesamten in dem Aufnahmeraum befindlichen Flüssigkeit zur Dampferzeugung auf einfache Weise ermöglicht wird. Zudem kann so nach einem Entleeren des Aufnahmeraums noch ggf. vorhandene bodenseitige Restflüssigkeit verdampft werden. Die Flächenheizung bedeckt vorzugsweise praktisch die gesamte Fläche des Bodens.

Der Vorratsraum wird mit Flüssigkeit, insbesondere Wasser, befüllt und entleert. Er wird vorzugsweise mit Frischwasser befüllt, während die entleerte Flüssigkeit beispielsweise als Abwasser angesehen werden kann.

Es ist eine noch Ausgestaltung, dass die Heizung als Überhitzungsdetektor dient. Beispielsweise mag die Heizung, insbesondere Flächenheizung, eine temperaturabhängig elektrisch leitfähige Schicht aufweisen. Dann kann eine Temperatur der Flächenheizung und folglich eine Überhitzung durch Feststellen einer Leitfähigkeit oder entsprechenden elektrischen Größe bestimmt werden, z.B. durch Vergleich mit einem vorbestimmten Schwellwert.

Alternativ mag ein von der Heizung getrennt hergestellter Überhitzungsdetektor verwendet werden. Dieser mag z.B. an die Heizung angedrückt, angeschweißt oder angelötet sein, z.B. ein Thermoelement. Er mag auch von der Heizung entfernt angeordnet sein, z.B. ein IR-Sensor.

Es ist eine Weiterbildung, dass die Befülleinrichtung und die Entleereinrichtung unterschiedliche Funktionseinheiten sind. Dadurch können die Fördereigenschaften besonders präzise auf den jeweiligen Zweck abgestimmt werden. So ist es auch eine Ausgestaltung, dass die Befülleinrichtung und die Entleereinrichtung jeweilige Pumpen aufweisen oder sind.

Es ist noch eine Weiterbildung, dass die Befülleinrichtung und die Entleereinrichtung fluidisch voneinander getrennt sind und dazu insbesondere an fluidisch voneinander getrennte Fluidzuleitungen angeschlossen sind. So kann beispielsweise eine Trennung eines Frischwasserbereichs von einem Abwasserbereich erreicht werden.

Alternativ mag eine Befülleinrichtung und Entleereinrichtung als eine einzige kombinierte Befüll- und Entleereinrichtung umgesetzt sein, z.B. mit oder als eine einzige Pumpe. Das Befüllen und Entleeren kann dann durch entsprechendes Stellen eines oder mehrerer Ventile eines zumindest abschnittsweise zusammenhängenden Leitungssystems für die Flüssigkeit erreicht werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.

Fig.1    zeigt als Explosionsdarstellung in Schrägansicht einen Verdampfer, der zur Durchführung des erfindungsgemäßen Verfahrens geeignet ist;

Fig.2    zeigt als Schnittdarstellung in Seitenansicht ein Dampfbehandlungsgerät mit dem Verdampfer aus Fig.1;

Fig.3    zeigt als Schnittdarstellung in Seitenansicht einen Ausschnitt aus dem zusammengebauten Verdampfer;

Fig.4    zeigt ein Ausführungsbeispiel des Verfahrens bei einem Entleeren des Verdampfers anhand eines Flussdiagramms; und

Fig.5    zeigt ein Ausführungsbeispiel des Verfahrens bei einem Befüllen des Verdampfers anhand eines Flussdiagramms.

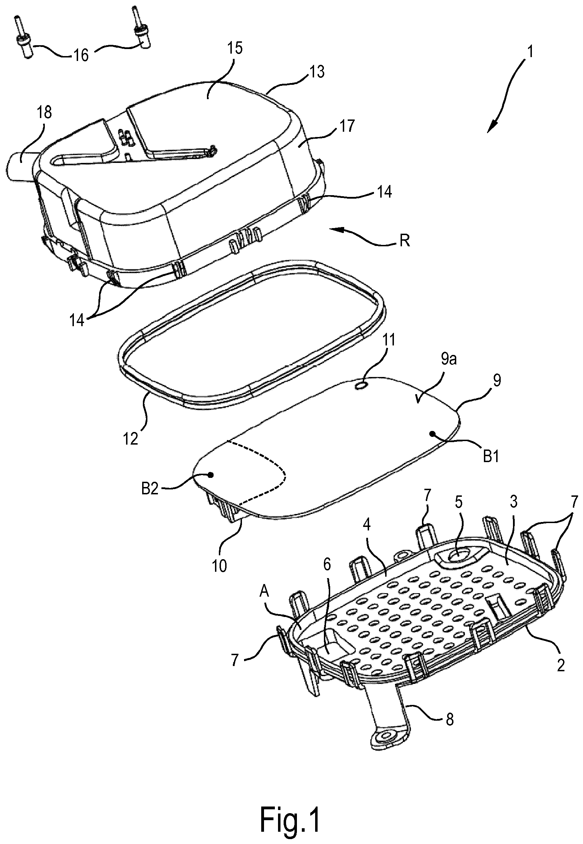

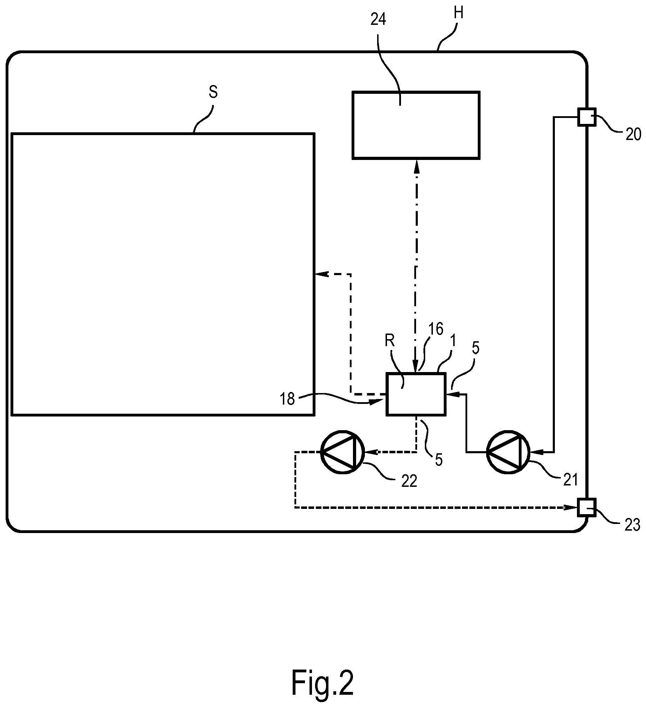

**Fig.1** zeigt als Explosionsdarstellung in Schrägansicht einen Verdampfer 1, welcher z.B. zur Verwendung in einem Haushalts-Dampfgargerät H (siehe Fig.2) vorgesehen ist, z.B. in einem eigenständigen Dampfgarer oder einem Backofen mit Dampfgarfunktion.

Der Verdampfer 1 weist ein Bodenteil 2 mit einem bodenseitigen Bereich 3 und einem daran anschließenden, vorderseitig vorstehenden umlaufenden Rand 4 auf. Der bodenseitige Bereich 3 weist hier beispielsweise eine ebene Grundform mit einer rechteckigen Außenkontur A mit abgerundeten Kanten auf. In dem bodenseitigen Bereich 3 befinden sich mindestens zwei Öffnungen, hier umfassend eine Wasserdurchlassöffnung 5 und eine Durchführungsöffnung 6 zum Durchführen eines elektrischen Anschlusses. Von dem Rand 4 stehen mehrere federnde Rastlaschen 7 nach oben hoch. Zudem geht in rückwärtige Richtung mindestens eine Befestigungslasche 8 ab, beispielsweise zur Verschraubung mit dem Haushalts-Dampfgargerät H.

Der bodenseitige Bereich 3 ist innenseitig ganzflächig und dicht von einer elektrisch betriebenen Flächenheizung 9 abgedeckt. Die Flächenheizung 9 weist an ihrer Rückseite einen elektrischen Anschluss 10 auf, welcher durch die Durchführungsöffnung 6 ragt. Die Flächenheizung 9 weist ferner ein Loch 11 auf, das deckungsgleich zu der Wasserdurchlassöffnung 5 liegt. Durch das Loch 11 und die Wasserdurchlassöffnung 5 kann Wasser eingefüllt und abgelassen werden.

Die Flächenheizung 9 ist flächig erwärmbar und mag dazu beispielsweise eine der Flüssigkeit zugewandte elektrisch leitfähige Oberfläche 9a aufweisen. Sie weist zudem eine (z.B. innenliegende) Schicht auf, welche bei Überschreiten einer vorbestimmten Grenztemperatur elektrisch leitend wird. Eine starke Änderung der elektrischen Leitfähigkeit bzw. des elektrischen Widerstands oder eines durch diese Schicht leitbaren Stroms deutet also auf ein Erreichen der Grenztemperatur hin und damit auch auf einen Eintritt eines Überhitzungsfalls. Die Grenztemperatur mag z.B. bei ca. 200 °C liegen. Die Flächenheizung 9 dient also somit gleichzeitig als Überhitzungsdetektor zum Feststellen ihrer Überhitzung.

Die Flächenheizung 9 weist optional mindestens einen beheizbaren oder beheizten Teilbereich bzw. mindestens eine beheizte Zone B1 und mindestens einen unbeheizten Teilbereich bzw. mindestens eine unbeheizte Zone B2 auf. Während an der beheizten Zone B1 beispielsweise mindestens ein Heizleiter (z.B. mäanderförmig) verlegt ist, fehlt dieser an der unbeheizten Zone B2. Eine Temperatur der beheizten Zone B1 liegt im eingeschalteten Zustand oberhalb einer vorbestimmten Temperatur T, während eine Temperatur der unbeheizten Zone B2 im eingeschalteten Zustand unterhalb der vorbestimmten Temperatur T liegt. Insbesondere mag das Wasser dadurch an der beheizten Zone B1 stark aufgewühlt werden, ggf. sogar kochen, während das Wasser bzw. dessen freie Oberfläche an der unbeheizten Zone B2 vergleichsweise ruhig bleibt. Die unbeheizte Zone B2 nimmt hier zumindest einen Eckbereich der Flächenheizung 9 ein.

Die Flächenheizung 9 und der Deckel 13 bilden zusammengesetzt einen Aufnahmeraum R für Wasser. Die Flächenheizung 9 bildet dabei den Boden des Aufnahmeraums R.

Auf dem Rand 4 sitzt über eine umlaufende Dichtung 12 ein gewölbter oder schalenförmiger Deckel 13 auf. Die Dichtung 12 mag beispielsweise randseitig auf die Flächenheizung 9 aufgezogen werden und diese gegen den bodenseitigen Bereich 3 und den Deckel 13 abdichten. Der Deckel 13 weist außenseitig mehrere Rastnasen 14 auf, welche zum Eingriff mit den Rastlaschen 7 vorgesehen sind und eine einfache Rastverbindung zwischen dem Bodenteil 2 und dem Deckel 13 erlauben. Der Deckel 13 weist in seiner dem Bodenteil 2 beabstandet gegenüberliegenden oberseitigen Wand 15 zwei Löcher (o. Abb.) zur Durchführung von elektrisch leitfähigen Kontaktstiften 16, insbesondere metallischen Stiften, auf. Die Kontaktstifte 16 liegen in dem Aufnahmeraum R frei.

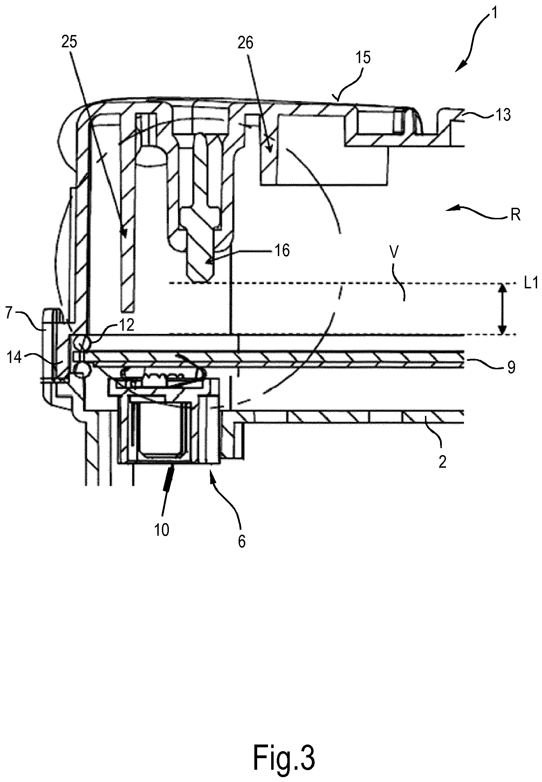

Die beiden Kontaktstifte 16 enden unterseitig insbesondere auf gleicher Höhe und werden durch in dem Aufnahmeraum R bzw. 2, 13 stehendes Wasser elektrisch miteinander verbunden, wenn das Wasser einen vorbestimmten (insbesondere "oberen") Füllstand L1 (siehe auch Fig.3) erreicht. Dieser elektrische Kurzschluss kann zum Bestimmen des vorbestimmten Füllstands L1 festgestellt werden, z.B. durch eine Steuereinrichtung 24 (siehe auch Fig.2). Die Steuereinrichtung 24 mag an die Kontaktstifte 16 eine Wechselkleinspannung anlegen, um elektrolytische Effekte auszuschließen.

Der Verdampfer 1 ist bei Erreichen des vorbestimmten Füllstands L1 mit einem Volumen V von Wasser gefüllt.

Die Kontaktstifte 16 liegen oberhalb der unbeheizten Zone B2 der Flächenheizung 9, um eine zuverlässigere Bestimmung eines vorbestimmten oberen Füllstands L1 zu ermöglichen, insbesondere wenig beeinflusst von einer aufgewühlten Wasseroberfläche.

An einer umlaufenden Seitenwand 17 des Deckels 13 in der Nähe der oberseitigen Wand 15 befindet sich ein Dampfauslass 18. Der hier beispielhaft stutzenartig ausgebildete Dampfauslass 18 mag z.B. an einen Schlauch zum Führen des von dem Verdampfer erzeugten Dampfs in dem Speisenbehandlungsraum S des Haushalts-Dampfgargeräts H angeschlossen werden. Der Dampfauslass 18 ist oberhalb der unbeheizten Zone B2 angeordnet, damit von aufgewühltem Wasser in der beheizten Zone B1 erzeugte kleine Wassertropfen nicht mit dem Dampfstrom mitgerissen werden. Dadurch erhöht sich die Dampfqualität. Je weniger Wassertröpfchen im Dampfstrom enthalten sind, desto höher ist sein Energiegehalt und somit die Effizienz. Des Weiteren wird verhindert, dass das Gargut bzw. die Speise in dem Speisebehandlungsraum S durch die Wassertröpfchen beschädigt wird.

Fig.2 zeigt als Schnittdarstellung in Seitenansicht ein Haushalts-Dampfgargerät H mit dem Verdampfer 1 aus Fig.1. Das Haushalts-Dampfgargerät H weist einen Frischwasseranschluss 20 auf, welcher über eine als Befülleinrichtung dienende Befüllpumpe 21 mit der Wasserdurchlassöffnung 5 des Verdampfers 1 verbunden ist. Der Verdampfer 1 ist mit seiner Wasserdurchlassöffnung 5 ferner über eine als Entleereinrichtung dienende Ablaufpumpe 22 mit einem Abwasseranschluss 23 des Verdampfers 1 verbunden. Ein Betrieb der Befüllpumpe 21 und der Ablaufpumpe 22 wird über eine Steuereinrichtung 24 gesteuert. Die Steuereinrichtung 24 ist auch mit den Kontaktstiften 16 verbunden und kann einen Kurzschluss an den Kontaktstiften 16 feststellen.

Die Steuereinrichtung 24 mag z.B. eine zentrale Steuereinrichtung des Haushalts-Dampfgargeräts H sein, welche beispielsweise noch weitere Funktionen steuern mag, z.B. einen Betrieb der Flächenheizung 9 des Verdampfers 1 und/oder mindestens eine Heizeinrichtung (o. Abb.) zum Beheizen eines Speisenbehandlungsraums S.

Die Wasserdurchlassöffnung 5 ist hier in Form zweier räumlich getrennter Wassereinlass- bzw. Wasserauslassöffnungen ausgebildet dargestellt, mag aber wie in Fig.1 eine gemeinsame Wasserdurchlassöffnung (d.h., eine kombinierte Wassereinlass- und Wasserauslassöffnung) sein.

Bei einem Betrieb des Verdampfers 1 zum Dampfbehandeln von Speisen wird über den Dampfauslass 18 des Verdampfers 1 Dampf in den ggf. aufgewärmten Speisenbehandlungsraum S des Haushalts-Dampfgargeräts H eingelassen. Dazu wird zunächst mittels der Befüllpumpe 21 Wasser in den Aufnahmeraum R eingepumpt, bis durch einen Kurzschluss zwischen den Kontaktstiften 16 das Erreichen des in Fig.3 gezeigten vorbestimmten Füllstands L1 festgestellt wird. Mit Feststellen des Kurzschlusses und damit des vorbestimmten Füllstands wird die Befüllpumpe 21 sofort oder nach einem zeitlich definierten Nachlauf (z.B. zwischen 1 sec und 3 sec) gestoppt. Die dann aktivierte Flächenheizung 9 lässt das Wasser verdampfen, so dass der Wasserpegel sinkt. Mit Sinken des Wasserpegels unter den Füllstand L1 wird der durch das Wasser vermittelte Kurzschluss wieder aufgehoben, und die Steuereinrichtung 24 aktiviert wieder die Befüllpumpe 21 zum Befüllen des Aufnahmeraums R mit Wasser usw. Typischerweise wird dabei pro Minute die Befüllpumpe 21 zweimal bis dreimal für jeweils fünf bis sieben Sekunden aktiviert. Der Aufbau des Verdampfers 1 ermöglicht eine besonders schnelle und verzögerungsfreie Verdampfung des eingefüllten Wassers, beispielsweise durch die großflächige Energieeinbringung mittels der Flächenheizung 9 und einen geringen vorbestimmten Füllstand L1 im Bereich von Millimetern, z.B. zwischen acht und zehn Millimetern, bevorzugt von 9 mm.

Wie weiter in Fig.3 gezeigt, ragen von der oberseitigen Wand 15 des Deckels 13 innenseitig Trennwände 25 und 26 in den Aufnahmeraum R. Zumindest eine der Trennwände 25 und 26 quert einen Bereich zwischen den beiden Kontaktstiften 16 und verlängert dadurch eine Strecke zwischen den Kontaktstiften 16. Dadurch wird eine elektrische Kriechstrecke zwischen den beiden Kontaktstiften 16 verlängert, welche sich beispielsweise durch einen feinen Belag an der Innenseite des Deckels 13 aus wasseraufnehmendem Kalk bilden kann.

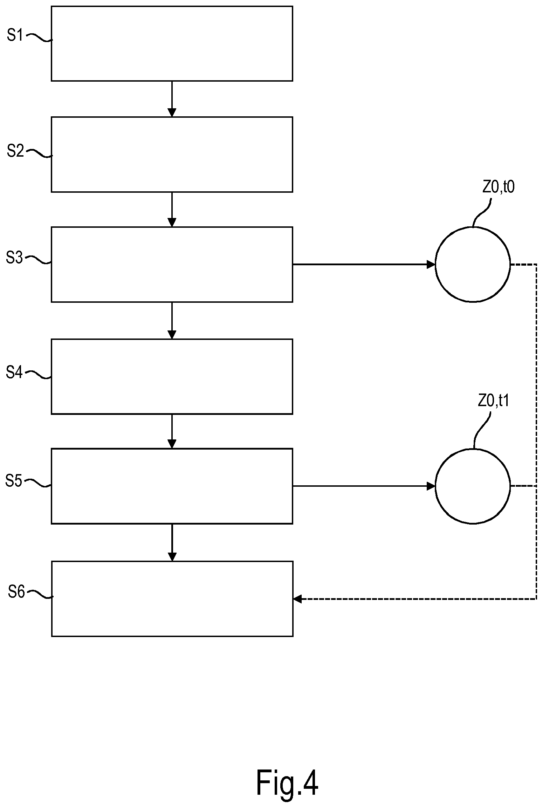

Wie in **Fig.4** dargestellt, kann der Verdampfer 1 auch so betrieben werden, dass zumindest die Förderleistung, Le, der Ablaufpumpe 22 beim Entleeren des Verdampfers 1 bzw. dessen Aufnahmeraum bestimmbar oder "kalibrierbar" ist. Der Verdampfer 1 wird dabei in einem "anormalen" Betrieb oder mit einem "anormalen" Programm betrieben, welcher bzw. welches keiner Dampfbehandlung einer Speise dient. Dieser anormale Betrieb mag z.B. bei einer Erstinbetriebnahme des Haushalts-Dampfgargerät H, nach einer Netzwiederkehr, im Anschluss an bestimmte Wartungsprogramme, im Rahmen eines Entkalkungsprogramms und/oder im Zusammenhang mit einem Funktionstest der Ablaufpumpe 22 durchgeführt werden.

Dazu wird, gesteuert durch eine Steuereinrichtung 24, in einem Schritt S1 der Verdampfer 1 mittels der Befüllpumpe 21 bis leicht über seinen vorbestimmten Füllstand L1 gefüllt, so dass die Kontaktstifte 16, die als Füllstandsdetektoren dienen, kurzgeschlossen werden. Dies wird von einer Steuereinrichtung 24 erkannt. Die Steuereinrichtung 24 hält daraufhin die Befüllpumpe 21 an und startet in einem Schritt S2 die Ablaufpumpe 22. Dadurch wird der Verdampfer 1 bzw. dessen Aufnahmeraum R entleert.

In einem folgenden Schritt S3 wird (z.B. von der Steuereinrichtung 24) dann, wenn zumindest einer der Kontaktstifte 16 nicht mehr mit Wasser bedeckt ist und folglich der obere Füllstand unterschritten ist, zu einem Startzeitpunkt t0 eine Zeitmessung Z0 mittels einer in die Steuereinrichtung 24 integrierten Zeitmesseinrichtung oder "Timer" gestartet.

In einem Schritt S4 wird unmittelbar mit Beginn der Zeitmessung Z0 oder mit einer vorbestimmten Verzögerung die Flächenheizung 9 angeschaltet. Mit fortschreitender Zeit entleert sich der Verdampfer 1. Dann überhitzt die Flächenheizung 9 mit einer nur geringen Zeitverzögerung, was z.B. von der Steuereinrichtung 24 feststellbar ist. Die Steuereinrichtung 24 stoppt daraufhin in einem Schritt S5 zu einem Endzeitpunkt t1 die Zeitmessung. Die Steuereinrichtung 24 schaltet zudem die Flächenheizung 9 aus bzw. ab und stoppt die Ablaufpumpe 22.

In einem weiteren Schritt S6 berechnet die auch als Berechnungseinrichtung dienende Steuereinrichtung 24 die Förderleistung Le der Ablaufpumpe 22, z.B. nach Gl. (1) oder nach Gl. (2).

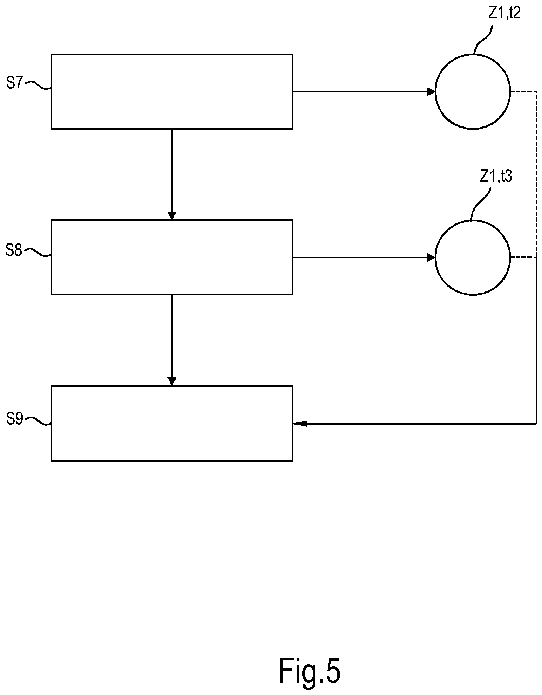

**Fig.5** zeigt ein Ausführungsbeispiel des Verfahrens mit einem auf das Entleeren gemäß der Schritte S1 bis S6 folgenden Befüllen.

Dabei wird der zuvor geleerte Verdampfer 1 in einem Schritt S7 mittels der Befüllpumpe 21 wieder gefüllt. Mit Beginn des Befüllens des Verdampfers 1 wird zu einem Startzeitpunkt t2 eine Zeitmessung Z1 gestartet, z.B. mittels der Steuereinrichtung 24. Erreicht das Wasser die Kontaktstifte 16, ist der obere Füllstand L1 erreicht.

Die Steuereinrichtung 24 stoppt zu diesem Endzeitpunkt t3 die Zeitmessung Z1 und stellt in einem Schritt S8 eine Zeitdauer $\Delta tb = t3 - t2$ zum Befüllen des Aufnahmeraums R bis zu dem Füllstand L1 fest.

In einem folgenden Schritt S9 berechnet die Steuereinrichtung 24 eine Förderleistung Fb beim Befüllen mittels Dividierens des bekannten Volumens V des Wassers am oberen Füllstand L1 mit der Zeitdauer $\Delta tb$ analog zu Gl. (1), oder analog z.B. zu Gl. (2).

Bezugszeichenliste

| | |
|---|---|
| 1 | Verdampfer |
| 2 | Bodenteil des Verdampfers |
| 3 | bodenseitiger Bereich |
| 4 | Rand |
| 5 | Wasserdurchlassöffnung |

| 6 | Durchführungsöffnung |
|---|---|
| 7 | Rastlasche |
| 8 | Befestigungslasche |
| 9 | Flächenheizung |
| 9a | Oberfläche der Flächenheizung |
| 10 | elektrischer Anschluss |
| 11 | Loch |
| 12 | Dichtung |
| 13 | Deckel |
| 14 | Rastnase |
| 15 | oberseitige Wand des Deckels |
| 16 | Kontaktstift |
| 17 | Seitenwand des Deckels |
| 18 | Dampfauslass |
| 20 | Frischwasseranschluss |
| 21 | Befüllpumpe |
| 22 | Ablaufpumpe |
| 23 | Abwasseranschluss |
| 24 | Steuereinrichtung |
| 25 | innenseitige Trennwand |
| 26 | innenseitige Trennwand |
| A | Außenkontur |
| B1 | beheizte Zone der Flächenheizung |
| B2 | unbeheizte Zone der Flächenheizung |
| H | Haushaltsgerät |
| L | Loch |
| L1 | vorbestimmter Füllstand |
| R | Aufnahmeraum |
| S | Speisebehandlungsraum |
| S1-S9 | Verfahrensschritte |
| t0 | Startzeitpunkt |
| t1 | Endzeitpunkt |
| t2 | Startzeitpunkt |
| t3 | Endzeitpunkt |
| V | Volumen |
| Z0 | Zeitmessung |
| Z1 | Zeitmessung |

**Patentansprüche**

**1.** Verfahren (S1-S9) zum Betreiben eines mit einer Heizung (9) versehenen Verdampfers (1) eines Haushaltsgeräts (H), wobei der Verdampfer zumindest einen Teil eines Füllstandsdetektors (16) zum Detektieren eines vorbestimmten Füllstands (L1) sowie zumindest einen Teil eines Überhitzungsdetektors (9) zum Feststellen einer Überhitzung der Heizung (9) aufweist, **dadurch gekennzeichnet, dass** das Verfahren mindestens die folgenden Schritte aufweist:

(i) (S1) Füllen des Verdampfers (1) mindestens bis zu dem vorbestimmten Füllstand (L1);
(ii) (S2) Entleeren des Verdampfers (1) mittels einer Entleereinrichtung (22);
(iii) (S3) Starten einer Zeitmessung (Z0), wenn der vorbestimmte Füllstand (L1) unterschritten wird,
(iv) (S4) Einschalten der Heizung (9) des Verdampfers (1), wenn der vorbestimmte Füllstand (L1) unterschritten wird;
(v) (S5) Stoppen der Zeitmessung (Z0), wenn ein Überhitzen der Heizung (9) festgestellt wird;
(vi) (S6) Berechnen einer Förderleistung bei dem Entleeren des Verdampfers (1) aus einer mittels der Zeitmessung (Z0) bestimmten Zeitdauer zum Entleeren, wobei das Berechnen ein Dividieren eines Flüssigkeitsvolumens des Verdampfers (1) mit der Zeitdauer zum Entleeren umfasst.

**2.** Verfahren (S1-S9) nach Anspruch 1, **dadurch gekennzeichnet, dass** Schritt (i) ein Füllen des Verdampfers (1) über den vorbestimmten Füllstand (L1) hinaus umfasst.

3. Verfahren (S1-S9) nach einem der vorhergehenden Ansprüche, **dadurch gekennzeichnet, dass** Schritt (iv) ein Einschalten der Heizung (9) unmittelbar dann, wenn der vorbestimmte Füllstand (L1) unterschritten wird, umfasst.

4. Verfahren (S1-S9) nach einem der Ansprüche 1 oder 2, **dadurch gekennzeichnet, dass** Schritt (iv) ein Einschalten der Heizung (9) mit einer definierten Verzögerung nach Feststellen des Unterschreitens des vorbestimmten Füllstands (L1) umfasst.

5. Verfahren (S1-S9) nach einem der vorhergehenden Ansprüche, **dadurch gekennzeichnet, dass** das Feststellen des Überhitzens der Heizung (9) in Schritt (v) ein Abschalten der Heizung (9) auslöst.

6. Verfahren (S1-S9) nach einem der vorhergehenden Ansprüche, **dadurch gekennzeichnet, dass** sich an Schritt (vi) folgende weitere Schritte anschließen:

(a) (S7) Befüllen des Verdampfers (1) mindestens bis zu dem vorbestimmten Füllstand (L1);
(b) (S8) Feststellen einer Zeitdauer zum Befüllen bis zu dem vorbestimmten Füllstand (L1);
(c) (S9) Berechnen einer Förderleistung beim Befüllen mittels Dividierens eines Flüssigkeitsvolumens des Verdampfers (1) mit der Zeitdauer zum Befüllen.

7. Verfahren (S1-S9) nach Anspruch 6, **dadurch gekennzeichnet, dass** im Normalbetrieb das Befüllen des Verdampfers (1) gestoppt wird, wenn ein auf Grundlage der Förderleistung beim Befüllen bestimmter Sicherheitsschwellwert erreicht oder überschritten wird.

8. Verfahren (S1-S9) nach einem der vorhergehenden Ansprüche, **dadurch gekennzeichnet, dass** das Verfahren (S1-S9) nach den Ansprüchen 1 bis 6 nur in einem anormalen Betrieb, welcher keiner Dampfbehandlung einer Speise dient, durchgeführt wird.

9. Haushaltsgerät (H), insbesondere Dampfgargerät, aufweisend:

- einen mit einer Heizung (9) versehenen Verdampfer (1), welcher einen Füllstandsdetektor (16) zum Detektieren eines vorbestimmten Füllstands (L1) sowie einen Überhitzungsdetektor (9) zum Feststellen einer Überhitzung der Heizung (9) aufweist,
- eine Befülleinrichtung (21) zum Befüllen des Verdampfers (1),
- eine Entleereinrichtung (22) zum Entleeren des Verdampfers (1), und
- eine Steuereinrichtung (24) mit einer Zeitmesseinrichtung, **dadurch gekennzeichnet, dass** das Haushaltsgerät (H)
- eingerichtet ist zum Durchführen des Verfahrens nach einem der vorhergehenden Ansprüche und
- eine Berechnungseinrichtung zumindest zum Berechnen der Förderleistung aufweist.

10. Haushaltsgerät (H) nach Anspruch 9, **dadurch gekennzeichnet, dass** die Heizung eine bodenseitig an einem Aufnahmeraum (R) für Flüssigkeit angeordnete Flächenheizung (9) ist, wobei der Aufnahmeraum (R) mittels der Befülleinrichtung (21) befüllbar und mittels der Entleereinrichtung (22) entleerbar wird.

11. Haushaltsgerät (H) nach Anspruch 10, **dadurch gekennzeichnet, dass** die Heizung (9) als Überhitzungsdetektor dient.

12. Haushaltsgerät (H) nach einem der Ansprüche 9 bis 11, **dadurch gekennzeichnet, dass** die Befülleinrichtung (21) und die Entleereinrichtung (22) jeweilige Pumpen aufweisen oder sind.

**Claims**

1. Method (S1-S9) for operating a vaporiser (1) of a household appliance (H), the vaporiser being provided with a heating system (9) and having at least part of a level detector (16) for detecting a predetermined filling level (L1) and at least part of an overheating detector (9) for establishing that the heating system (9) has overheated, **characterised in that** the method has at least the following steps:

(i) (S1) filling the vaporiser (1) at least to the predetermined filling level (L1);

(ii) (S2) emptying the vaporiser (1) by means of an emptying arrangement (22);

(iii) (S3) starting a time measurement (Z0) once the level falls below the predetermined filling level (L1);

(iv) (S4) switching on the heating system (9) of the vaporiser (1) once the level falls below the predetermined filling level (L1);

(v) (S5) stopping the time measurement (Z0) once it has been established that the heating system (9) has overheated;

(vi) (S6) calculating a delivery output during emptying of the vaporiser (1), from a duration for emptying that is determined by means of the time measurement (Z0) wherein the calculation comprises dividing a liquid volume of the vaporiser (1) by the duration for emptying.

2. Method (S1-S9) according to claim 1, **characterised in that** step (i) comprises filling the vaporiser (1) beyond the predetermined filling level (L1).

3. Method (S1-S9) according to one of the preceding claims, **characterised in that** step (iv) comprises switching on the heating system (9) directly once the level falls below the predetermined filling level (L1).

4. Method (S1-S9) according to one of claims 1 or 2, **characterised in that** step (iv) comprises switching on the heating system (9) with a defined delay once it has been established that the level has fallen below the predetermined filling level (L1).

5. Method (S1-S9) according to one of the preceding claims, **characterised in that** establishing the fact of overheating of the heating system (9) in step (v) triggers switching off of the heating system (9).

6. Method (S1-S9) according to one of the preceding claims, **characterised in that** the following further steps follow step (vi):

(a) (S7) filling the vaporiser (1) at least to the predetermined filling level (L1);

(b) (S8) establishing a duration for filling to the predetermined filling level (L1);

(c) (S9) calculating a delivery output during filling by means of dividing a liquid volume of the vaporiser (1) by the duration for filling.

7. Method (S1-S9) according to claim 6, **characterised in that** in normal operation filling of the vaporiser (1) is stopped if a safety threshold value that is determined on the basis of the delivery output during filling is reached or exceeded.

8. Method (S1-S9) according to one of the preceding claims, **characterised in that** the method (S1-S9) according to claims 1 to 6 is performed only in an abnormal operation that does not serve for the vapor processing of food.

9. Household appliance (H), in particular steam cooking appliance, having:

- a vaporiser (1) that is provided with a heating system (9), wherein the vaporiser has a level detector (16) for detecting a predetermined filling level (L1) and an overheating detector (9) for establishing that the heating system (9) has overheated,
- a filling arrangement (21) for filling the vaporiser (1),
- an emptying arrangement (22) for emptying the vaporiser (1), and
- a control device (24) with a time measuring arrangement,
**characterised in that** the household appliance (H)
- is set up for performing the method according to one of the preceding claims, and
- has a calculating arrangement at least for calculating the delivery output.

10. Household appliance (H) according to claim 9, **characterised in that** the heating system is a surface heating system (9) that is arranged on the base of a receiving chamber (R) for liquid, wherein the receiving chamber (R) may be filled by means of the filling arrangement (21) and emptied by means of the emptying arrangement (22).

11. Household appliance (H) according to claim 10, **characterised in that** the heating system (9) serves as an overheating detector.

12. Household appliance (H) according to one of claims 9 to 11, **characterised in that** the filling arrangement (21) and the emptying arrangement (22) each have or are pumps.

**Revendications**

1. Procédé (S1-S9) destiné à faire fonctionner un évaporateur (1) d'un appareil électroménager (H) doté d'un dispositif chauffant (9), dans lequel l'évaporateur présente au moins une partie d'un détecteur de niveau de remplissage (16) destiné à détecter un niveau de remplissage prédéterminé (L1) ainsi qu'au moins une partie d'un détecteur de surchauffe (9) destiné à constater une surchauffe du dispositif chauffant (9), **caractérisé en ce que** le procédé présente au moins les étapes suivantes :

   (i) (S1) remplissage de l'évaporateur (1) au moins jusqu'au niveau de remplissage prédéterminé (L1) ;
   (ii) (S2) vidange de l'évaporateur (1) au moyen d'un dispositif de vidange (22) ;
   (iii) (S3) démarrage d'une mesure de temps (Z0) lorsque le niveau de remplissage prédéterminé (L1) n'est pas atteint ;
   (iv) (S4) allumage du dispositif chauffant (9) de l'évaporateur (1) lorsque le niveau de remplissage prédéterminé (L1) n'est pas atteint ;
   (v) (S5) arrêt de la mesure de temps (Z0) lorsqu'une surchauffe du dispositif chauffant (9) est constatée ;
   (vi) (S6) calcul d'une capacité de refoulement lors de la vidange de l'évaporateur (1) à partir d'une durée déterminée au moyen de la mesure de temps (Z0) destinée à la vidange, dans lequel le calcul comprend une division d'un volume de liquide de l'évaporateur (1) avec la durée destinée à la vidange.

2. Procédé (S1-S9) selon la revendication 1, **caractérisé en ce que** l'étape (i) comprend un remplissage de l'évaporateur (1) au-delà du niveau de remplissage prédéterminé (L1).

3. Procédé (S1-S9) selon l'une des revendications précédentes, **caractérisé en ce que** l'étape (iv) comprend un allumage du dispositif chauffant (9) directement dès lors le niveau de remplissage prédéterminé (L1) n'est pas atteint.

4. Procédé (S1-S9) selon l'une des revendications 1 ou 2, **caractérisé en ce que** l'étape (iv) comprend un allumage du dispositif chauffant (9) avec une temporisation définie après la constatation que l'état de remplissage prédéfini (L1) n'a pas été atteint.

5. Procédé (S1-S9) selon l'une des revendications précédentes, **caractérisé en ce que** la constatation de la surchauffe du dispositif chauffant (9) à l'étape (v) déclenche une extinction du dispositif chauffant (9).

6. Procédé (S1-S9) selon l'une des revendications précédentes, **caractérisé en ce que** les étapes supplémentaires suivantes succèdent à l'étape (vi) :

   (a) (S7) remplissage de l'évaporateur (1) au moins jusqu'au niveau de remplissage prédéterminé (L1) ;
   (b) (S8) constatation d'une durée en vue destinée au remplissage jusqu'au niveau de remplissage prédéterminé (L1) ;
   (c) (S9) calcul d'une capacité de refoulement lors du remplissage au moyen d'une division d'un volume de liquide de l'évaporateur (1) avec la durée destinée au remplissage.

7. Procédé (S1-S9) selon la revendication 6, **caractérisé en ce que** lors du fonctionnement normal le remplissage de l'évaporateur (1) est arrêté lorsqu'une valeur de seuil de sécurité déterminée sur la base de la capacité de refoulement lors du remplissage est atteinte ou dépassée.

8. Procédé (S1-S9) selon l'une des revendications précédentes, **caractérisé en ce que** le procédé (S1-S9) selon les revendications 1 à 6 est mené à bien uniquement lors d'un fonctionnement anormal, lequel ne sert à aucun traitement à la vapeur d'un plat.

9. Appareil électroménager (H), en particulier appareil de cuisson à la vapeur, présentant :

   - un évaporateur (1) doté d'un dispositif chauffant (9), lequel évaporateur présente un détecteur de niveau de remplissage (16) destiné à détecter un niveau de remplissage prédéterminé (L1) ainsi qu'un détecteur de surchauffe (9) destiné à constater une surchauffe du dispositif chauffant (9),
   - un dispositif de remplissage (21) destiné à remplir l'évaporateur (1),

- un dispositif de vidange (22) destiné à vidanger l'évaporateur (1), et
- un dispositif de commande (24) avec un dispositif de mesure de temps,
**caractérisé en ce que** l'appareil électroménager (H)
- est adapté pour mener à bien le procédé selon l'une des revendications précédentes et
- présente un dispositif de calcul au moins destiné à calculer la capacité de refoulement.

10. Appareil électroménager (H) selon la revendication 9, **caractérisé en ce que** le dispositif chauffant est un dispositif chauffant de surface (9) disposé côté partie inférieure au niveau d'un espace de logement (R) pour un liquide, dans lequel l'espace de logement (R) peut être rempli au moyen du dispositif de remplissage (21) et vidangé au moyen du dispositif de vidange (22).

11. Appareil électroménager (H) selon la revendication 10, **caractérisé en ce que** le dispositif chauffant (9) sert de détecteur de surchauffe.

12. Appareil électroménager (H) selon l'une des revendications 9 à 11, **caractérisé en ce que** le dispositif de remplissage (21) et le dispositif de vidange (22) présentent ou sont des pompes respectives.

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006029578 A1
- DE 102009044053 A1
- DE 102010029307 A1
- WO 2009007456 A2
- EP 0471342 A2
- DE 102009055146 A1
- DE 19741881 A1
- EP 2703740 A1